(19) Europäisches Patentamt / European Patent Office / Office européen des brevets

(11) **EP 3 617 356 B1**

(12) **EUROPEAN PATENT SPECIFICATION**

(45) Date of publication and mention
of the grant of the patent:
**28.09.2022  Bulletin 2022/39**

(21) Application number: **18790114.5**

(22) Date of filing: **16.04.2018**

(51) International Patent Classification (IPC):
*D04B 1/20* *(2006.01)*  *D02G 3/28* *(2006.01)*
*D02J 1/08* *(2006.01)*  *D06P 1/52* *(2006.01)*
*D06P 1/613* *(2006.01)*  *D06P 3/52* *(2006.01)*
*D06P 3/54* *(2006.01)*  *D02G 3/04* *(2006.01)*

(52) Cooperative Patent Classification (CPC):
**D02G 3/28; D02J 1/08; D04B 1/20; D06P 1/5271;
D06P 1/613; D06P 3/522; D06P 3/54;** D02G 3/04;
D10B 2331/04; D10B 2401/022

(86) International application number:
**PCT/JP2018/015653**

(87) International publication number:
**WO 2018/198846 (01.11.2018 Gazette 2018/44)**

(54) **FABRIC AND FIBER PRODUCT**

STOFF- UND FASERPRODUKT

TISSU ET PRODUIT FIBREUX

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.04.2017  JP 2017086199**

(43) Date of publication of application:
**04.03.2020  Bulletin 2020/10**

(73) Proprietor: **Teijin Frontier Co., Ltd.
Osaka-shi, Osaka 530-0005 (JP)**

(72) Inventor: **OGATA Nobuaki
Osaka-shi
Osaka 530-0005 (JP)**

(74) Representative: **Carpmaels & Ransford LLP
One Southampton Row
London WC1B 5HA (GB)**

(56) References cited:
EP-A1- 2 037 026     WO-A1-2008/001920
WO-A1-2017/038239    JP-A- H05 247 760
JP-A- H09 157 971    JP-A- S52 124 956
JP-A- S54 142 346    JP-A- S55 163 229
JP-A- 2003 166 136   JP-A- 2010 216 019
JP-A- 2010 255 128   JP-A- 2013 204 202
JP-U- 3 212 193      US-A- 3 879 928
US-A1- 2003 094 019

**Description**

Technical Field

The present invention relates to a cloth and a fiber product, which exhibit not only stretchability but also novel appearance and novel hand due to ununiformity of the appearance and hand.

Background Art

Conventionally, a stretch cloth using a crimped fiber has been proposed, and, mainly in the sportswear field, products using such a stretch cloth have been developed. For example, PTL's 1 and 2 propose a cloth including a crimped fiber having a torque of 30 T/m or less.

Meanwhile, the needs of the consumers have diversified, and a proposal of a cloth which exhibits novel appearance and novel hand is desired.

Citation List

Patent Literature

PTL 1: International Patent Application Publication No. 2008/001920
PTL 2: JP-A-2009-138287

EP2037026A1 relates to a knitted fabric containing a composite yarn constituted of two or more kinds of false-twist crimped yarns and has a torque of not more than 30 T/m.

WO2017/038239A1 relates to a cloth comprising a conjugate fiber having two components side by side and a crimped fiber having a torque of 30 T/m or less. JPH09157971A relates to a coil-like composite crimped yarn.

Summary of Invention

Technical Problem

In view of the above, the present invention has been made, and an object of the invention is to provide a cloth and a fiber product, which exhibit not only stretchability but also novel appearance and novel hand due to ununiformity of the appearance and hand.

Solution to Problem

The present inventor has conducted extensive and intensive studies with a view toward achieving the above-mentioned object. As a result, it has been found that, with respect to a cloth including a crimped fiber having a torque of 30 T/m or less, when the crimped fiber contains two or more types of single fibers, a cloth which exhibits novel appearance and novel hand due to ununiformity of the appearance and hand can be obtained, and further extensive and intensive studies have been made, and thus the present invention has been completed.

Accordingly, in the invention, there is provided "a cloth including a crimped fiber having a torque of 30 T/m or less, wherein the crimped fiber is a composite yarn containing a false twisted crimped textured yarn A having torque in the S direction and a false twisted crimped textured yarn B having torque in the Z direction, wherein the false twisted crimped textured yarn A and the false twisted crimped textured yarn B contain two or more types of single fibers which are different from each other".

In the cloth of the invention, the two or more types of single fibers which are different from each other comprise a combination of a cationically dyable polyester and a cationically undyable polyester . Further, it is preferred that the cloth is knitted fabric. The crimped fiber is an interlaced yarn which has been subjected to interlacing in which the number of interlaces is 1 to 70 interlaces/m. Further, it is preferred that the crimped fiber has no torque. The crimped fiber has a single fiber fineness in the range of from 0.00002 to 2.0 dtex. Further, the crimped fiber has a total fineness in the range of from 40 to 180 dtex. Further, it is preferred that the cloth has a weight per unit in the range of from 50 to 200 g/m2. Further, the cloth has applied thereto a hydrophilizing agent. Further, it is preferred that the cloth has a stretchability of 50% or more in the cross direction, as measured in accordance with JIS L 1018-1990. Further, it is preferred that the cloth has a stretchability recovery of 90% or more in the cross direction, as measured in accordance with JIS L 1018-1990.

Further, it is preferred that the cloth has a snagging resistance of class 3 or higher, as tested by the metal saw of JIS L 1058-1995 D3 Method for 15 hours.

Further, in the invention, there is provided a fiber product obtained using the above-mentioned cloth, which is any one fiber product selected from the group consisting of clothing, a lining cloth, an interlining cloth, socks, a stomach band, a hat, gloves, nightclothes, a side cloth for bedclothes (futon), a cover for bedclothes (futon), and a car seat skin material.

Advantageous Effects of Invention

By the present invention, there can be obtained a cloth and a fiber product, which exhibit not only stretchability but also novel appearance and novel hand due to ununiformity of the appearance and hand.

Brief Description of Drawings

Fig. 1 is an example of a knitting structure diagram (sheeting) which can be employed in the invention.
Fig. 2 is an example of a knitting structure diagram (knit-miss) which can be employed in the invention.

Description of Embodiments

Hereinbelow, an embodiment of the present invention will be described in detail. First, in the invention, a crimped fiber having a torque of 30 T/m or less (hereinafter, frequently referred to simply as "crimped fiber") is contained. By virtue of the crimped fiber contained in the cloth, stretchability is imparted to the cloth.

Further, the crimped fiber contains two or more types (preferably 2 to 5 types, especially preferably 2 types) of single fibers which are different from each other, and, by virtue of this, novel appearance and novel hand due to ununiformity of the appearance and hand can be obtained.

In the cloth of the invention, the two or more types of single fibers which are different from each other comprise a combination of a cationically dyable polyester and a cationically undyable polyester.

The single fibers which are "different from each other in respect of the component" include a combination of different types of polymers, which - according to the invention - are a combination of a cationically dyeable polyester and a cationically undyeable polyester.

In the cloth of the invention, the crimped fiber is a composite yarn containing a false twisted crimped textured yarn A having torque in the S direction and a false twisted crimped textured yarn B having torque in the Z direction, wherein the false twisted crimped textured yarn A and the false twisted crimped textured yarn B contain different single fibers from each other.

With respect to the false twisted crimped textured yarn, there are a so-called one heater false twisted crimped textured yarn which has false twist set in the first heater region, and a so-called second heater false twisted crimped textured yarn which has torque reduced by further introducing the above yarn into the second heater region to subject the yarn to relaxation heat treatment. Further, according to the direction of twisting, there are a false twisted crimped textured yarn having torque in the S direction and a false twisted crimped textured yarn having torque in the Z direction. In the invention, these false twisted crimped textured yarns are used. A false twisted crimped textured yarn having torque in the S direction and a false twisted crimped textured yarn having torque in the Z direction form a composite yarn because a composite yarn having a low torque can be obtained.

The composite yarn can be produced by, for example, the method described below. Specifically, a yarn may be passed through a first roller and a heat treatment heater at a set temperature of 90 to 220°C (more preferably 100 to 190°C) and twisted by means of a twisting apparatus to obtain a one heater false twisted crimped textured yarn. If necessary, the obtained yarn may be further introduced into the second heater region and subjected to relaxation heat treatment to obtain a second heater false twisted crimped textured yarn. The draw ratio in the false twisting is preferably in the range of from 0.8 to 1.5. With respect to the number of false twist, in the formula: the number of false twist (T/m) = $(32,500/(D)^{1/2}) \times \alpha$, $\alpha$ is preferably in the range of from 0.5 to 1.5 (more preferably 0.8 to 1.2). The D means a total fineness (dtex) of the yarn. With respect to the twisting apparatus used, a frictional twisting apparatus of a disc type or a belt type is appropriate because it is easy to set a yarn and a yarn breakage is unlikely to occur, but a twisting apparatus of a pin type may be used. Further, according to the direction of twisting, the direction of the torque of the false twisted crimped textured yarn can be selected from the S direction and the Z direction. Then, two or more types of false twisted crimped textured yarns containing different single fibers from each other are doubled, obtaining the composite yarn.

The crimped fiber has interlaces imparted by interlacing. The number of interlaces is in the range of from 1 to 70 interlaces/m (more preferably 2 to 65 interlaces/m). When the number of interlaces is too large, there is a possibility that not only does the stretchability deteriorate, but also ununiformity is such poor that novel appearance and novel hand cannot be obtained.

It is important that the obtained composite yarn has a torque of 30 T/m or less (preferably 18 T/m or less, more preferably 10 T/m or less, especially preferably no torque (0 T/m)). The composite yarn preferably has a smaller torque, most preferably no torque (0 T/m).

Further, the crimped fiber preferably has a crimp degree of 2% or more (more preferably 10 to 60%). When the crimp degree is less than 2%, there is a possibility that the stretchability becomes poor.

The crimped fiber has a single fiber fineness in the range of from 0.00002 to 2.0 dtex. When the single fiber fineness is larger than 2.0 dtex, there is a possibility that the softness becomes poor.

Further, the crimped fiber has a total fineness (product of a single fiber fineness and the number of filaments) in the range of from 40 to 400 dtex (more preferably 40 to 180 dtex).

Further, as examples of single fiber cross-sectional forms of the crimped fiber, there can be mentioned a triangle, a rectangle, a cross shape, a flattened shape, a flattened shape with a shoulder, an H-shape, and a W-shape. In the flattened cross-sectional form, a cross-sectional flatness represented by ratio $B/C1$ is preferably in the range of from 2 to 6 (more preferably 3.1 to 5.0) from the viewpoint of the softness of the cloth, wherein $B/C1$ is the ratio of a length B in the direction of the longitudinal center line to a maximum width $C1$ in the direction perpendicular to the direction of the longitudinal center line. Further, the ratio $C1/C2$ of a maximum value $C1$ to a minimum value $C2$ of the width is preferably in the range of from 1.05 to 4.00 (more preferably 1.1 to 1.5) from the viewpoint of the water absorption properties of the cloth.

According to the invention, the fiber constituting the crimped fiber is a polyester fiber. In examples not forming part of the invention, there is no particular limitation for fiber constituting a crimped fiber, and an acrylic fiber, a nylon fiber, a rayon fiber, an acetate fiber, or a natural fiber, such as cotton, wool, or silk, or a composite thereof can be used. Such a polyester fiber includes a conjugate fiber containing at least a polyester component. Examples of such conjugate fibers include a side-by-side type conjugate fiber, an eccentric sheath-core manner conjugate fiber, a sheath-core manner conjugate fiber, and an island-in-sea type conjugate fiber. Further, in examples not forming part of the invention, the nylon fiber includes a nylon 6 fiber and a nylon 66 fiber.

With respect to the polyester, preferred is a polyester having terephthalic acid as a main acid component, and having as a main glycol component an alkylene glycol having 2 to 6 carbon atoms, specifically, at least one member selected from the group consisting of ethylene glycol, trimethylene glycol, tetramethylene glycol, pentamethylene glycol, and hexamethylene glycol. Of these, especially preferred is a polyester having ethylene glycol as a main glycol component (polyethylene terephthalate) or a polyester having trimethylene glycol as a main glycol component (polytrimethylene terephthalate).

The polyester may have a copolymerized component in a small amount (generally 30 mol% or less) if necessary. As examples of difunctional carboxylic acids other than terephthalic acid used in the polyester, there can be mentioned aromatic, aliphatic, or alicyclic difunctional carboxylic acids, such as isophthalic acid, naphthalenedicarboxylic acid, diphenyldicarboxylic acid, diphenoxyethanedicarboxylic acid, β-hydroxyethoxybenzoic acid, P-oxybenzoic acid, sodium 5-sulfoisophthalate, adipic acid, sebacic acid, and 1,4-cyclohexanedicarboxylic acid. Further, as examples of diol compounds other than the above-mentioned glycol, there can be mentioned aliphatic, alicyclic, or aromatic diol compounds and polyoxyalkylene glycol, such as cyclohexane-1,4-dimethanol, neopentyl glycol, bisphenol A, and bisphenol S.

The polyester may be one which is synthesized by an arbitrary method. For example, explanation is made below on polyethylene terephthalate. Polyethylene terephthalate may be one that is produced through a first stage reaction in which terephthalic acid and ethylene glycol are directly subjected to esterification reaction, or a lower alkyl ester of terephthalic acid, such as dimethyl terephthalate, and ethylene glycol are subjected to transesterification reaction, or terephthalic acid and ethylene oxide are reacted to form a glycol ester of terephthalic acid and/or a low polymer thereof, and a second stage reaction in which the reaction product obtained in the first stage is heated under a reduced pressure to cause a polycondensation reaction until a desired degree of polymerization is achieved. Alternatively, the polyester may be a polyester obtained by material recycle or chemical recycle, or, as described in JP-A-2004-270097 and JP-A-2004-211268, a polyester obtained using a catalyst containing a specific phosphorus compound and titanium compound. Further alternatively, the polyester may be a polyester having biodegradability, such as polylactic acid or stereocomplex polylactic acid.

Further, it is preferred that the polyester contains an ultraviolet light absorber in an amount of 0.1% by weight or more (preferably 0.1 to 5.0% by weight), based on the weight of the polyester, because ultraviolet light screening properties are imparted to the cloth. Examples of such ultraviolet light absorbers include a benzoxazine organic ultraviolet light absorber, a benzophenone organic ultraviolet light absorber, a benzotriazole organic ultraviolet light absorber, and a salicylic acid organic ultraviolet light absorber. Of these, a benzoxazine organic ultraviolet light absorber is especially preferred because it is not decomposed on the stage of spinning.

As a preferred example of the benzoxazine organic ultraviolet light absorber, there can be mentioned one disclosed in JP-A-62-11744. Specifically, there can be mentioned 2-methyl-3,1-benzoxazin-4-one, 2-butyl-3,1-benzoxazin-4-one, 2-phenyl-3,1-benzoxazin-4-one, 2,2'-ethylenebis(3,1-benzoxazin-4-one), 2,2'-tetramethylenebis(3,1-benzoxazin-4-one), 2,2'-p-phenylenebis(3,1-benzoxazin-4-one), 1,3,5-tri(3,1-benzoxazin-4-on-2-yl)benzene, and 1,3,5-tri(3,1-benzoxazin-4-on-2-yl)naphthalene.

Further, the polyester preferably contains a matting agent (titanium dioxide) in an amount of 0.1% by weight or more (preferably 0.2 to 4.0% by weight), based on the weight of the polyester, because the cloth is improved in transparency preventive properties.

Further, if necessary, the polyester may contain one or more members of a micropore forming agent (organic sulfonic acid metal salt), a color protection agent, a thermal stabilizer, a flame retardant (diantimony trioxide), a fluorescent brightener, a coloring pigment, an antistatic agent (sulfonic acid metal salt), a moisture absorbing agent (polyoxyalkylene glycol), an anti-fungus agent, and other inorganic particles.

The cloth of the invention includes the above-mentioned crimped fiber. In the cloth, it is preferred that the crimped fiber is contained in an amount of 50% by weight or more, based on the weight of the cloth.

The structure of the cloth is not particularly limited, and may be any of knitted fabric and woven fabric. Preferred examples of fabric include woven fabric having a weave structure, such as plain weave, twill weave, or satin; knitted fabric having a knitting structure, such as sheeting, knit-miss, interlock stitch, circular rib stitch, kanoko stitch, platted stitch, denbigh, or half; and nonwoven fabric, but the fabric is not limited to these. With respect to the number of layers, the cloth may be either of a single layer or of a multilayer having two or more layers. Especially, knitted fabric is preferred in view of obtaining excellent stretchability. Particularly, knitted fabric having a warp knitted or weft knitted (circular knitted) fabric structure is preferred.

With respect to the above-mentioned knitted fabric, it is preferred that the knitted fabric has a knitted fabric density in which the course number is 40 to 100/2.54 cm and the wales number is 30 to 60/2.54 cm.

The cloth of the invention preferably has a weight per unit in the range of from 50 to 200 g/m$^2$.

The cloth of the invention is obtained by knitting or weaving using the above-mentioned crimped fiber (if necessary, using other fibers) by a general method.

Then, the cloth is preferably subjected to dyeing processing. In this case, the temperature of the dyeing processing is preferably 100 to 140°C (more preferably 110 to 135°C), and, with respect to the time, the keeping time for the highest temperature is preferably in the range of from 5 to 40 minutes. The knitted fabric which has been subjected to dyeing processing is preferably subjected to dry heat final setting. In this case, the temperature of the dry heat final setting is preferably in the range of from 120 to 200°C (more preferably 140 to 180°C), and the time for the dry heat final setting is preferably in the range of from 1 to 3 minutes.

Further, the cloth of the invention has been subjected to water absorption processing (application of a hydrophilizing agent). By subjecting the cloth to water absorption processing, the cloth is improved in water absorption properties. The a hydrophilizing agent (water absorption processing agent), such as polyethylene glycol diacrylate or a derivative thereof, or a polyethylene terephthalate-polyethylene glycol copolymer, may be deposited onto the cloth in an amount of 0.25 to 0.50% by weight, based on the weight of the cloth. As examples of methods for water absorption processing, there can be mentioned a method of processing in a bath in which a water absorption processing agent is mixed into a dyeing liquid at the time of
dyeing processing, a method in which, before being subjected to dry heat final setting, the cloth is dipped in a water absorption processing liquid and squeezed using a mangle, and methods of processing by coating, such as a gravure coating method and a screen printing method.

Further, raising processing by a general method, or various types of processing for imparting a function using an ultraviolet light screening or anti-fungus agent, a deodorant, a mothproofing agent, a phosphorescent agent, a retroreflective agent, a negative ion generator, a water repellent, or the like may be additionally applied.

The obtained cloth includes the above-mentioned crimped fiber, and the crimped fiber contains two or more types (preferably 2 to 5 types, especially preferably 2 types) of single fibers which are different from each other, and therefore novel appearance and novel hand due to ununiformity of the appearance and hand can be obtained.

In the cloth, it is preferred that, with respect to at least one of the surface and the back surface of the cloth, the cloth preferably has a water absorption of 7 cm or more (more preferably 7 to 15 cm), as measured in accordance with JIS L1907-1998 5.1.2 Byreck method.

Further, it is preferred that, with respect to at least one of the surface and the back surface of the cloth which has been subjected to washing three times in accordance with JIS L0217-1998, 103 Method, the cloth preferably has a water absorption of 8 cm or more (more preferably 8 to 16 cm), as measured in accordance with JIS L1907-1998 5.1.2 Byreck method.

Further, with respect to the snagging resistance, it is preferred that the cloth has a snagging resistance of class 3 or higher, as tested by the metal saw of JIS L 1058-1995 D3 Method for 15 hours.

The cloth of the invention further exhibits stretchability due to the crimped fiber. With respect to the stretchability, it is preferred that the cloth has a stretchability of 50% or more (preferably 80 to 130%) in the cross direction, as measured in accordance with JIS L 1018-1990. Further, it is preferred that the cloth has a stretchability recovery of 90% or more in the cross direction, as measured in accordance with JIS L 1018-1990.

Further, in the invention, there is provided a fiber product obtained using the above-mentioned cloth, which is any one fiber product selected from the group consisting of clothing, a lining cloth, an interlining cloth, socks, a stomach band, a hat, gloves, nightclothes, a side cloth for bedclothes (futon), a cover for bedclothes (futon), and a car seat skin material. The fiber product uses the above-mentioned cloth, and therefore exhibits novel appearance and novel hand due to ununiformity of the appearance and hand.

Examples

Hereinbelow, the present invention will be described in more detail with reference to the following Examples, which should not be construed as limiting the scope of the invention. In the following Examples, the physical properties were measured in accordance with the methods described below.

(1) Torque

An about 70 cm sample (crimped yarn) is stretched horizontally, and an initial load of 0.18 mN $\times$ indicated tex (2 mg/de) is suspended from the center portion of the sample, and then the both ends are pulled to straighten the yarn. The yarn starts rotating due to the residual torque, and is left in that state until the initial load is still, obtaining a twisted yarn. With respect to the obtained twisted yarn, the number of twist with a length of 25 cm under a load of 17.64 mN $\times$ indicated tex (0.2 g/de) is measured by a twist detector. The obtained number of twist (T/25 cm) is quadrupled and the resultant value is used as a torque (T/m).

(2) Interlace degree

An interlaced yarn with a length of 1 m under a load of 8.82 mN $\times$ indicated tex (0.1 g/de) is taken, and the load is removed, and, after release at room temperature for 24 hours, the number of interlaces is read and indicated in the number of interlaces/m.

(3) Crimp degree

A yarn to be tested is wound round a counter wheel having a circumferential length of 1.125 m to prepare a hank having a dry fineness of 3,333 dtex. The hank is suspended from a suspender nail of a scale plate, and an initial load of 6 g is applied to the lower portion of the hank, and a load of 600 g is further applied and a length L0 of the hank at that time is measured. Immediately after that, the load is removed from the hank, and the hank is taken out from the suspender nail of the scale plate, and the hank is immersed in boiling water for 30 minutes to cause crimp. The hank which has been subjected to boiling water treatment is taken out from the boiling water, and water contained in the hank is removed by allowing filter paper to absorb the water, and the hank is air-dried at room temperature for 24 hours. The air-dried hank is suspended from a suspender nail of a scale plate, and a load of 600 g is applied to the lower portion of the hank, and, after one minute, a length L1a of the hank is measured, and then the load is removed from the hank, and, after one minute, a length L2a of the hank is measured. A crimp degree (CP) of the filament yarn to be tested is calculated from the following formula.

$$CP\ (\%) = ((L1a - L2a)/L0) \times 100$$

(4) Stretchability in the cross direction and stretchability recovery in the cross direction
A stretchability and stretchability recovery in the cross direction are measured in accordance with JIS L 1018-1990.

(5) Snagging resistance

A test is conducted by the metal saw of JIS L 1058-1995 D3 Method for 15 hours.

(6) Weight per unit

A weight per unit is measured in accordance with JIS L1018-1998 6.4.

[Example 1]

Using cationically dyeable, copolymerized polyethylene terephthalate (having sodium 5-sulfoisophthalate copolymerized; matting agent content: 0.3% by weight), a yarn was melt spun at 280°C from a general spinning apparatus, and taken at a speed of 2,800 m/minute and wound without drawing to obtain a semi-drawn polyester yarn (total fineness: 90 dtex/36 fil; cross-sectional form of the single fiber: circular cross-section, POY).

Then, using the obtained polyester yarn, co-draw false twist crimping was performed under conditions such that the draw ratio was 1.6 times, the number of false twist was 2,500 T/m (Z direction), the heater temperature was 180°C, and the yarn speed was 350 m/minute.

Meanwhile, using cationically undyeable polyethylene terephthalate (matting agent content: 0.3% by weight; semidull), a yarn was melt spun at 280°C from a general spinning apparatus, and taken at a speed of 2,800 m/minute and wound without drawing to obtain a semi-drawn polyester yarn (total fineness: 90 dtex/36 fil; cross-sectional form of the single fiber: circular cross-section, POY).

Then, using the obtained polyester yarn, co-draw false twist crimping was performed under conditions such that the draw ratio was 1.6 times, the number of false twist was 2,500 T/m (S direction), the heater temperature was 180°C, and the yarn speed was 350 m/minute.

Then, the false twisted crimped textured yarn having torque in the Z direction and the false twisted crimped textured yarn having torque in the S direction were doubled and subjected to air interlace treatment to obtain a composite yarn (total fineness: 110 dtex/72 fil; crimp degree: 18%; torque: 6 T/m) as a crimped fiber. In this instance, the air interlace treatment was interlacing using an interlacing nozzle, in which 65 interlaces/m were imparted with an overfeeding ratio of 1.0%.

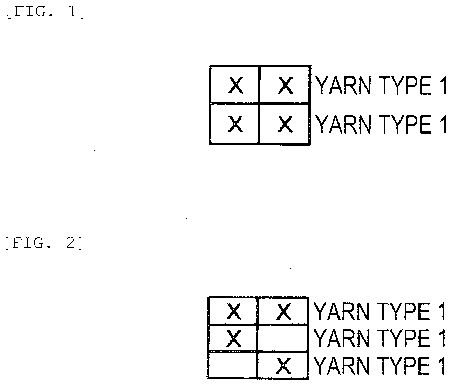

Then, using a 28-gauge circular knitting machine, and using the above-obtained crimped fiber, knitting of a circular knitted fabric having a sheeting structure shown in Fig. 1 was conducted.

Then, the knitted fabric was subjected to dyeing processing using a cationic dye at a temperature of 130°C for a keeping time of 15 minutes. In this instance, the knitted fabric was treated using the same bath upon the dyeing processing and using a hydrophilizing agent (polyethylene terephthalate-polyethylene glycol copolymer) in a 2 milliliters/liter ratio to the dyeing liquid, so that the hydrophilizing agent was applied to the knitted fabric. Then, the circular knitted fabric was subjected to dry heat final setting at a temperature of 160°C for a time of one minute.

The obtained knitted fabric had excellent stretchability, and exhibited novel appearance and novel hand due to ununiformity of the appearance and hand. The results of the evaluations are shown in Table 1.

[Example 2] - not forming part of the present invention

Using cationically undyeable polyethylene terephthalate (matting agent content: 0.3% by weight; semidull), a yarn was melt spun at 280°C from a general spinning apparatus, and taken at a speed of 2,800 m/minute and wound without drawing to obtain a semi-drawn polyester yarn (total fineness: 90 dtex/36 fil; cross-sectional form of the single fiber: cross shape cross-section, POY).

Then, using the obtained polyester yarn, co-draw false twist crimping was performed under conditions such that the draw ratio was 1.6 times, the number of false twist was 2,500 T/m (Z direction), the heater temperature was 180°C, and the yarn speed was 350 m/minute.

Meanwhile, using cationically undyeable polyethylene terephthalate (matting agent content: 0.3% by weight; semidull), a yarn was melt spun at 280°C from a general spinning apparatus, and taken at a speed of 2,800 m/minute and wound without drawing to obtain a semi-drawn polyester yarn (total fineness: 90 dtex/36 fil; cross-sectional form of the single fiber: circular cross-section, POY).

Then, using the obtained polyester yarn, co-draw false twist crimping was performed under conditions such that the draw ratio was 1.6 times, the number of false twist was 2,500 T/m (S direction), the heater temperature was 180°C, and the yarn speed was 350 m/minute.

Then, the false twisted crimped textured yarn having torque in the Z direction and the false twisted crimped textured yarn having torque in the S direction were doubled and subjected to air interlace treatment to obtain a composite yarn (total fineness: 110 dtex/72 fil; crimp degree: 15%; torque: 4 T/m) as a crimped fiber. In this instance, the air interlace treatment was interlacing using an interlacing nozzle, in which 2 interlaces/m were imparted.

Then, using a 28-gauge circular knitting machine, and using the above-obtained crimped fiber, knitting of a circular knitted fabric having a knit-miss structure shown in Fig. 2 was conducted.

Then, the knitted fabric was subjected to dyeing processing using a disperse dye at a temperature of 130°C for a keeping time of 15 minutes. In this instance, the knitted fabric was treated using the same bath upon the dyeing processing and using a hydrophilizing agent (polyethylene terephthalate-polyethylene glycol copolymer) in a 2 milliliters/liter ratio to the dyeing liquid, so that the hydrophilizing agent was applied to the knitted fabric. Then, the circular knitted fabric was subjected to dry heat final setting at a temperature of 160°C for a time of one minute.

The obtained knitted fabric had excellent stretchability, and exhibited novel appearance and novel hand due to ununiformity of the appearance and hand. The results of the evaluations are shown in Table 1.

[Example 3] - not forming part of the invention

Using cationically undyeable polyethylene terephthalate (matting agent content: 0.3% by weight; semidull), a yarn was melt spun at 280°C from a general spinning apparatus, and taken at a speed of 2,800 m/minute and wound without drawing to obtain a semi-drawn polyester yarn (total fineness: 145 dtex/72 fil; cross-sectional form of the single fiber: circular cross-section, POY).

Then, using the obtained polyester yarn, co-draw false twist crimping was performed under conditions such that the draw ratio was 1.6 times, the number of false twist was 2,500 T/m (Z direction), the heater temperature was 180°C, and the yarn speed was 350 m/minute.

Meanwhile, using cationically undyeable polyethylene terephthalate (matting agent content: 0.3% by weight; semidull), a yarn was melt spun at 280°C from a general spinning apparatus, and taken at a speed of 2,800 m/minute and wound without drawing to obtain a semi-drawn polyester yarn (total fineness: 145 dtex/36 fil; cross-sectional form of the single fiber: circular cross-section, POY).

Then, using the obtained polyester yarn, co-draw false twist crimping was performed under conditions such that the draw ratio was 1.6 times, the number of false twist was 2,500 T/m (S direction), the heater temperature was 180°C, and the yarn speed was 350 m/minute.

Then, the false twisted crimped textured yarn having torque in the Z direction and the false twisted crimped textured yarn having torque in the S direction were doubled and subjected to air interlace treatment to obtain a composite yarn (total fineness: 167 dtex/108 fil; crimp degree: 13%; torque: 15 T/m) as a crimped fiber. In this instance, the air interlace treatment was interlacing using an interlacing nozzle, in which 56 interlaces/m were imparted.

Then, using a 28-gauge circular knitting machine, and using the above-obtained crimped fiber, knitting of a circular knitted fabric having a sheeting structure shown in Fig. 1 was conducted.

Then, the knitted fabric was subjected to dyeing processing using a disperse dye at a temperature of 130°C for a keeping time of 15 minutes. In this instance, the knitted fabric was treated using the same bath upon the dyeing processing and using a hydrophilizing agent (polyethylene terephthalate-polyethylene glycol copolymer) in a 2 milliliters/liter ratio to the dyeing liquid, so that the hydrophilizing agent was applied to the knitted fabric. Then, the circular knitted fabric was subjected to dry heat final setting at a temperature of 160°C for a time of one minute.

The obtained knitted fabric had excellent stretchability, and exhibited novel appearance and novel hand due to ununiformity of the appearance and hand. The results of the evaluations are shown in Table 1.

[Example 4]

Using cationically undyeable polyethylene terephthalate (matting agent content: 0.3% by weight; semidull), a yarn was melt spun at 280°C from a general spinning apparatus, and taken at a speed of 2,800 m/minute and wound without drawing to obtain a semi-drawn polyester yarn (total fineness: 145 dtex/72 fil; cross-sectional form of the single fiber: cross shape cross-section, POY).

Then, using the obtained polyester yarn, co-draw false twist crimping was performed under conditions such that the draw ratio was 1.6 times, the number of false twist was 2,500 T/m (Z direction), the heater temperature was 180°C, and the yarn speed was 350 m/minute.

Meanwhile, using cationically dyeable, copolymerized polyethylene terephthalate (having sodium 5-sulfoisophthalate copolymerized; matting agent content: 0.3% by weight; semidull), a yarn was melt spun at 280°C from a general spinning apparatus, and taken at a speed of 2,800 m/minute and wound without drawing to obtain a semi-drawn polyester yarn (total fineness: 145 dtex/36 fil; cross-sectional form of the single fiber: circular cross-section, POY).

Then, using the obtained polyester yarn, co-draw false twist crimping was performed under conditions such that the draw ratio was 1.6 times, the number of false twist was 2,500 T/m (S direction), the heater temperature was 180°C, and the yarn speed was 350 m/minute.

Then, the false twisted crimped textured yarn having torque in the Z direction and the false twisted crimped textured yarn having torque in the S direction were doubled and subjected to air interlace treatment to obtain a composite yarn (total fineness: 167 dtex/108 fil; crimp degree: 12%; torque: 12 T/m) as a crimped fiber. In this instance, the air interlace treatment was interlacing using an interlacing nozzle, in which 25 interlaces/m were imparted with an overfeeding ratio of 1.0%.

Then, using a 28-gauge circular knitting machine, and using the above-obtained crimped fiber, knitting of a circular knitted fabric having a sheeting structure shown in Fig. 1 was conducted.

Then, the knitted fabric was subjected to dyeing processing using a cationic dye at a temperature of 130°C for a keeping time of 15 minutes. In this instance, the knitted fabric was treated using the same bath upon the dyeing

EP 3 617 356 B1

processing and using a hydrophilizing agent (polyethylene terephthalate-polyethylene glycol copolymer) in a 2 milliliters/liter ratio to the dyeing liquid, so that the hydrophilizing agent was applied to the knitted fabric. Then, the circular knitted fabric was subjected to dry heat final setting at a temperature of 160°C for a time of one minute.

The obtained knitted fabric had excellent stretchability, and exhibited novel appearance and novel hand due to ununiformity of the appearance and hand. The results of the evaluations are shown in Table 1.

[Table 1]

| | | Example 1 | | Example 2 | | Example 3 | | Example 4 | |
|---|---|---|---|---|---|---|---|---|---|
| | | Grade, Cross-section | Twisting direction | Grade, Cross-section | Twisting direction | Grade, Cross-section | Twisting direction | Grade, Cross-section | Twisting direction |
| Yarn type | POY used | CD90T36, Circular | Z | SD90T36, Cross shape | Z | SD145T72, Circular | Z | SD145T72, Cross shape | Z |
| | | SD90T36, Circular | S | SD90T36, Circular | S | SD145T36, Circular | S | CD145T36, Circular | S |
| | Grade | 110T72 | | 110T72 | | 167T108 | | 167T108 | |
| | Torque (T/M), Direction | 6(S) | | 4 (Z) | | 15(S) | | 12(S) | |
| | Crimp degree (%) | 18 | | 15 | | 13 | | 12 | |
| | I.L. (Interlaces/m) | 65 | | 2 | | 56 | | 25 | |
| Knitted fabric | Type of knitting machine (Gauge) | 28G Single | | 28G Single | | 28G Single | | 28G Single | |
| | Structure | Sheeting | | Knit-miss | | Sheeting | | Sheeting | |
| | Weight per unit | 115 | | 135 | | 140 | | 145 | |
| | Course (Course number/2.54 cm) | 58 | | 50 | | 43 | | 45 | |
| | Wales (Wales number/2.54 cm) | 42 | | 47 | | 42 | | 41 | |
| | Snagging (D3 Method, Class) | 4.5 | | 4.5 | | 4.5 | | 4 | |
| | Stretchability (Cross, %) | 56 | | 48 | | 47 | | 44 | |
| | Stretchability recovery (Cross, %) | 92 | | 95 | | 92 | | 93 | |

[Example 5]

Using cationically undyeable polyethylene terephthalate (matting agent content: 0.3% by weight), a yarn was melt spun at 280°C from a general spinning apparatus, and taken at a speed of 2,800 m/minute and wound without drawing to obtain a semi-drawn polyester yarn (total fineness: 90 dtex/72 fil; cross-sectional form of the single fiber: circular cross-section, POY).

Then, using the obtained polyester yarn, co-draw false twist crimping was performed under conditions such that the draw ratio was 1.6 times, the number of false twist was 2,500 T/m (Z direction), the heater temperature was 180°C, and the yarn speed was 350 m/minute.

Meanwhile, using cationically dyeable, copolymerized polyethylene terephthalate (having sodium 5-sulfoisophthalate copolymerized; matting agent content: 0.3% by weight; semidull), a yarn was melt spun at 280°C from a general spinning apparatus, and taken at a speed of 2,800 m/minute and wound without drawing to obtain a semi-drawn polyester yarn (total fineness: 90 dtex/36 fil; cross-sectional form of the single fiber: circular cross-section, POY).

Then, using the obtained polyester yarn, co-draw false twist crimping was performed under conditions such that the draw ratio was 1.6 times, the number of false twist was 2,500 T/m (S direction), the heater temperature was 180°C, and the yarn speed was 350 m/minute.

Then, the false twisted crimped textured yarn having torque in the Z direction and the false twisted crimped textured yarn having torque in the S direction were doubled and subjected to air interlace treatment to obtain a composite yarn (total fineness: 110 dtex/108 fil; crimp degree: 12%; torque: 6 T/m) as a crimped fiber. In this instance, the air interlace treatment was interlacing using an interlacing nozzle, in which 35 interlaces/m were imparted with an overfeeding ratio of 1.0%.

Then, using a 28-gauge circular knitting machine, and using the above-obtained crimped fiber, knitting of a circular knitted fabric having a sheeting structure shown in Fig. 1 was conducted.

Then, the knitted fabric was subjected to dyeing processing using a cationic dye at a temperature of 130°C for a keeping time of 15 minutes. In this instance, the knitted fabric was treated using the same bath upon the dyeing processing and using a hydrophilizing agent (polyethylene terephthalate-polyethylene glycol copolymer) in a 2 milliliters/liter ratio to the dyeing liquid, so that the hydrophilizing agent was applied to the knitted fabric. Then, the circular knitted fabric was subjected to dry heat final setting at a temperature of 160°C for a time of one minute.

The obtained knitted fabric had excellent stretchability, and exhibited novel appearance and novel hand due to ununiformity of the appearance and hand. The results of the evaluations are shown in Table 2.

[Example 6] - not forming part of the present invention

Using cationically undyeable polyethylene terephthalate (matting agent content: 0.3% by weight), a yarn was melt spun at 280°C from a general spinning apparatus, and taken at a speed of 2,800 m/minute and wound without drawing to obtain a semi-drawn polyester yarn (total fineness: 90 dtex/72 fil; cross-sectional form of the single fiber: circular cross-section, POY).

Then, using the obtained polyester yarn, co-draw false twist crimping was performed under conditions such that the draw ratio was 1.6 times, the number of false twist was 2,500 T/m (Z direction), the heater temperature was 180°C, and the yarn speed was 350 m/minute.

Meanwhile, using cationically undyeable polyethylene terephthalate (matting agent content: 1.2% by weight; fulldull), a yarn was melt spun at 280°C from a general spinning apparatus, and taken at a speed of 2,800 m/minute and wound without drawing to obtain a semi-drawn polyester yarn (total fineness: 56 dtex/36 fil; cross-sectional form of the single fiber: circular cross-section, POY).

Then, using the obtained polyester yarn, co-draw false twist crimping was performed under conditions such that the draw ratio was 1.6 times, the number of false twist was 2,500 T/m (S direction), the heater temperature was 180°C, and the yarn speed was 350 m/minute.

Then, the false twisted crimped textured yarn having torque in the Z direction and the false twisted crimped textured yarn having torque in the S direction were doubled and subjected to air interlace treatment to obtain a composite yarn (total fineness: 88 dtex/108 fil; crimp degree: 12%; torque: 12 T/m) as a crimped fiber. In this instance, the air interlace treatment was interlacing using an interlacing nozzle, in which 5 interlaces/m were imparted with an overfeeding ratio of 1.0%.

Then, using a 28-gauge circular knitting machine, and using the above-obtained crimped fiber, knitting of a circular knitted fabric having a sheeting structure shown in Fig. 1 was conducted.

Then, the knitted fabric was subjected to dyeing processing using a cationic dye at a temperature of 130°C for a keeping time of 15 minutes. In this instance, the knitted fabric was treated using the same bath upon the dyeing processing and using a hydrophilizing agent (polyethylene terephthalate-polyethylene glycol copolymer) in a 2 milliliters/liter ratio to the dyeing liquid, so that the hydrophilizing agent was applied to the knitted fabric. Then, the circular knitted fabric was subjected to dry heat final setting at a temperature of 160°C for a time of one minute.

The obtained knitted fabric had excellent stretchability, and exhibited novel appearance and novel hand due to ununiformity of the appearance and hand. The results of the evaluations are shown in Table 2.

[Example 7] - not forming part of the present invention

Using cationically undyeable polyethylene terephthalate (matting agent content: 0.3% by weight), a yarn was melt spun at 280°C from a general spinning apparatus, and taken at a speed of 2,800 m/minute and wound without drawing to obtain a semi-drawn polyester yarn (total fineness: 56 dtex/72 fil; cross-sectional form of the single fiber: circular cross-section, POY).

Then, using the obtained polyester yarn, co-draw false twist crimping was performed under conditions such that the draw ratio was 1.6 times, the number of false twist was 2,500 T/m (Z direction), the heater temperature was 180°C, and the yarn speed was 350 m/minute.

Meanwhile, using cationically undyeable polyethylene terephthalate (matting agent content: 1.2% by weight; fulldull), a yarn was melt spun at 280°C from a general spinning apparatus, and taken at a speed of 2,800 m/minute and wound without drawing to obtain a semi-drawn polyester yarn (total fineness: 56 dtex/36 fil; cross-sectional form of the single fiber: circular cross-section, POY).

Then, using the obtained polyester yarn, co-draw false twist crimping was performed under conditions such that the draw ratio was 1.6 times, the number of false twist was 2,500 T/m (S direction), the heater temperature was 180°C, and the yarn speed was 350 m/minute.

Then, the false twisted crimped textured yarn having torque in the Z direction and the false twisted crimped textured yarn having torque in the S direction were doubled and subjected to air interlace treatment to obtain a composite yarn (total fineness: 66 dtex/108 fil; crimp degree: 12%; torque: 0 T/m) as a crimped fiber. In this instance, the air interlace treatment was interlacing using an interlacing nozzle, in which 48 interlaces/m were imparted with an overfeeding ratio of 1.0%.

Then, using a 28-gauge circular knitting machine, and using the above-obtained crimped fiber, knitting of a circular knitted fabric having a sheeting structure shown in Fig. 1 was conducted.

Then, the knitted fabric was subjected to dyeing processing using a cationic dye at a temperature of 130°C for a keeping time of 15 minutes. In this instance, the knitted fabric was treated using the same bath upon the dyeing processing and using a hydrophilizing agent (polyethylene terephthalate-polyethylene glycol copolymer) in a 2 milliliters/liter ratio to the dyeing liquid, so that the hydrophilizing agent was applied to the knitted fabric. Then, the circular knitted fabric was subjected to dry heat final setting at a temperature of 160°C for a time of one minute.

The obtained knitted fabric had excellent stretchability, and exhibited novel appearance and novel hand due to ununiformity of the appearance and hand. The results of the evaluations are shown in Table 2.

[Table 2]

| | | Example 5 | | Example 6 | | Example 7 | |
|---|---|---|---|---|---|---|---|
| | | Grade, Cross-section | Twisting direction | Grade, Cross-section | Twisting direction | Grade, Cross-section | Twisting direction |
| Yarn type | POY used | SD90T72, Circular | Z | SD90T72, Circular | Z | SD56T72, Circular | Z |
| | | CD90T36, Circular | S | FD56T36, Circular | S | FD56T36, Circular | S |
| | Grade | 110T108 | | 88T108 | | 66T108 | |
| | Torque (T/M), Direction | 6 (S) | | 12(Z) | | 0 | |
| | Crimp degree (%) | 12 | | 12 | | 12 | |
| | I.L. (Interlaces/m) | 35 | | 5 | | 48 | |

(continued)

| | | Example 5 | | Example 6 | | Example 7 | |
|---|---|---|---|---|---|---|---|
| | | Grade, Cross-section | Twisting direction | Grade, Cross-section | Twisting direction | Grade, Cross-section | Twisting direction |
| Knitted fabric | Type of knitting machine (Gauge) | 28G Single | | 36G Single | | 46G Single | |
| | Structure | Sheeting | | Sheeting | | Sheeting | |
| | Weight per unit | 125 | | 115 | | 98 | |
| | Course (Course number/2.54 cm) | 48 | | 65 | | 87 | |
| | Wales (Wales number/2.54 cm) | 46 | | 54 | | 61 | |
| | Snagging (D3 Method, Class) | 4 | | 4 | | 4 | |
| | Stretchability (Cross, %) | 50 | | 42 | | 40 | |
| | Stretchability recovery (Cross, %) | 94 | | 95 | | 97 | |

[Comparative Example 1]

Using cationically dyeable, copolymerized polyethylene terephthalate (having sodium 5-sulfoisophthalate copolymerized; matting agent content: 0.3% by weight; semidull), a yarn was melt spun at 280°C from a general spinning apparatus, and taken at a speed of 2,800 m/minute and wound without drawing to obtain a semi-drawn polyester yarn (total fineness: 90 dtex/36 fil; cross-sectional form of the single fiber: circular cross-section, POY).

Then, using the obtained polyester yarn, co-draw false twist crimping was performed under conditions such that the draw ratio was 1.6 times, the number of false twist was 2,500 T/m (Z direction), the heater temperature was 180°C, and the yarn speed was 350 m/minute.

Meanwhile, using cationically undyeable polyethylene terephthalate (matting agent content: 0.3% by weight; semidull), a yarn was melt spun at 280°C from a general spinning apparatus, and taken at a speed of 2,800 m/minute and wound without drawing to obtain a semi-drawn polyester yarn (total fineness: 90 dtex/36 fil; cross-sectional form of the single fiber: circular cross-section, POY).

Then, using the obtained polyester yarn, co-draw false twist crimping was performed under conditions such that the draw ratio was 1.6 times, the number of false twist was 2,500 T/m (Z direction), the heater temperature was 180°C, and the yarn speed was 350 m/minute.

Then, these yarns were doubled and subjected to air interlace treatment to obtain a composite yarn (total fineness: 110 dtex/72 fil; crimp degree: 17%; torque: 35 T/m) as a crimped fiber. In this instance, the air interlace treatment was interlacing using an interlacing nozzle, in which 82 interlaces/m were imparted with an overfeeding ratio of 1.0%.

Then, using a 28-gauge circular knitting machine, and using the above-obtained crimped fiber, knitting of a circular knitted fabric having a sheeting structure shown in Fig. 1 was conducted.

Then, the knitted fabric was subjected to dyeing processing using a cationic dye at a temperature of 130°C for a keeping time of 15 minutes. In this instance, the knitted fabric was treated using the same bath upon the dyeing processing and using a hydrophilizing agent (polyethylene terephthalate-polyethylene glycol copolymer) in a 2 milliliters/liter ratio to the dyeing liquid, so that the hydrophilizing agent was applied to the knitted fabric. Then, the circular knitted fabric was subjected to dry heat final setting at a temperature of 160°C for a time of one minute.

The obtained knitted fabric was poor in respect of the stretchability, novel appearance, and novel hand, as compared to the knitted fabric obtained in Example 1. The results of the evaluations are shown in Table 3.

[Comparative Example 2]

Using cationically undyeable polyethylene terephthalate (matting agent content: 0.3% by weight; semidull), a yarn was melt spun at 280°C from a general spinning apparatus, and taken at a speed of 2,800 m/minute and wound without drawing to obtain a semi-drawn polyester yarn (total fineness: 145 dtex/72 fil; cross-sectional form of the single fiber: circular cross-section, POY).

Then, using the obtained polyester yarn, co-draw false twist crimping was performed under conditions such that the draw ratio was 1.6 times, the number of false twist was 2,500 T/m (Z direction), the heater temperature was 180°C, and the yarn speed was 350 m/minute.

Meanwhile, using cationically undyeable polyethylene terephthalate (matting agent content: 0.3% by weight; semidull), a yarn was melt spun at 280°C from a general spinning apparatus, and taken at a speed of 2,800 m/minute and wound without drawing to obtain a semi-drawn polyester yarn (total fineness: 145 dtex/36 fil; cross-sectional form of the single fiber: circular cross-section, POY).

Then, using the obtained polyester yarn, co-draw false twist crimping was performed under conditions such that the draw ratio was 1.6 times, the number of false twist was 2,500 T/m (Z direction), the heater temperature was 180°C, and the yarn speed was 350 m/minute.

Then, these yarns were doubled and subjected to air interlace treatment to obtain a composite yarn (total fineness : 167 dtex/108 fil; crimp degree: 14%; torque: 31 T/m) as a crimped fiber. In this instance, the air interlace treatment was interlacing using an interlacing nozzle, in which 77 interlaces/m were imparted.

Then, using a 28-gauge circular knitting machine, and using the above-obtained crimped fiber, knitting of a circular knitted fabric having a sheeting structure shown in Fig. 1 was conducted.

Then, the knitted fabric was subjected to dyeing processing using a disperse dye at a temperature of 130°C for a keeping time of 15 minutes. In this instance, the knitted fabric was treated using the same bath upon the dyeing processing and using a hydrophilizing agent (polyethylene terephthalate-polyethylene glycol copolymer) in a 2 milliliters/liter ratio to the dyeing liquid, so that the hydrophilizing agent was applied to the knitted fabric. Then, the circular knitted fabric was subjected to dry heat final setting at a temperature of 160°C for a time of one minute.

The obtained knitted fabric was poor in respect of the stretchability, novel appearance, and novel hand, as compared to the knitted fabric obtained in Example 4. The results of the evaluations are shown in Table 3.

[Table 3]

| | | | Comparative Example 1 | | Comparative Example 2 | |
|---|---|---|---|---|---|---|
| | | | Grade, Cross-section | Twisting direction | Grade, Cross-section | Twisting direction |
| Yarn type | POY used | | SD90T36, Circular | Z | SD145T72, Circular | Z |
| | | | CD90T36, Circular | Z | SD145T36, Circular | Z |
| | Grade | | 110T72 | | 167T108 | |
| | Torque (T/M), Direction | | 35(Z) | | 31(Z) | |
| | Crimp degree (%) | | 17 | | 14 | |
| | I.L. (Interlaces/m) | | 82 | | 77 | |

(continued)

| | | Comparative Example 1 | | Comparative Example 2 | |
|---|---|---|---|---|---|
| | | Grade, Cross-section | Twisting direction | Grade, Cross-section | Twisting direction |
| Knitted fabric | Type of knitting machine (Gauge) | 28G Single | | 28G Single | |
| | Structure | Sheeting | | Sheeting | |
| | Weight per unit | 110 | | 138 | |
| | Course (Course number/ 2.54 cm) | 45 | | 45 | |
| | Wales (Wales number/ 2.54 cm) | 41 | | 41 | |
| | Snagging (D3 Method, Class) | 3 | | 2.5 | |
| | Stretchability (Cross, %) | 42 | | 40 | |
| | Stretchability recovery (Cross, %) | 88 | | 85 | |

[Comparative Example 3]

Using cationically undyeable polyethylene terephthalate (matting agent content: 0.3% by weight), a yarn was melt spun at 280°C from a general spinning apparatus, and taken at a speed of 2,800 m/minute and wound without drawing to obtain a semi-drawn polyester yarn (total fineness: 90 dtex/36 fil; cross-sectional form of the single fiber: circular cross-section, POY).

Then, using the obtained polyester yarn, co-draw false twist crimping was performed under conditions such that the draw ratio was 1.6 times, the number of false twist was 2,500 T/m (Z direction), the heater temperature was 180°C, and the yarn speed was 350 m/minute.

Meanwhile, using cationically undyeable polyethylene terephthalate (matting agent content: 0.3% by weight; semidull), a yarn was melt spun at 280°C from a general spinning apparatus, and taken at a speed of 2,800 m/minute and wound without drawing to obtain a semi-drawn polyester yarn (total fineness: 90 dtex/36 fil; cross-sectional form of the single fiber: circular cross-section, POY).

Then, using the obtained polyester yarn, co-draw false twist crimping was performed under conditions such that the draw ratio was 1.6 times, the number of false twist was 2,500 T/m (S direction), the heater temperature was 180°C, and the yarn speed was 350 m/minute.

Then, the false twisted crimped textured yarn having torque in the Z direction and the false twisted crimped textured yarn having torque in the S direction were doubled and subjected to air interlace treatment to obtain a composite yarn (total fineness: 110 dtex/72 fil; crimp degree: 18%; torque: 6 T/m) as a crimped fiber. In this instance, the air interlace treatment was interlacing using an interlacing nozzle, in which 65 interlaces/m were imparted with an overfeeding ratio of 1.0%.

Then, using a 28-gauge circular knitting machine, and using the above-obtained crimped fiber, knitting of a circular knitted fabric having a sheeting structure shown in Fig. 1 was conducted.

Then, the knitted fabric was subjected to dyeing processing using a cationic dye at a temperature of 130°C for a keeping time of 15 minutes. In this instance, the knitted fabric was treated using the same bath upon the dyeing processing and using a hydrophilizing agent (polyethylene terephthalate-polyethylene glycol copolymer) in a 2 milliliters/liter ratio to the dyeing liquid, so that the hydrophilizing agent was applied to the knitted fabric. Then, the circular knitted fabric was subjected to dry heat final setting at a temperature of 160°C for a time of one minute.

The obtained knitted fabric had excellent stretchability, but did not exhibit novel appearance and novel hand.

Industrial Applicability

In the present invention, there are provided a cloth and a fiber product, which exhibit not only stretchability but also novel appearance and novel hand due to ununiformity of the appearance and hand, and the invention is of extremely great industrial significance.

**Claims**

1. A cloth comprising a crimped fiber having a torque of 30 T/m or less, wherein torque is measured according to the method described in the description; wherein the crimped fiber is a composite yarn containing a false twisted crimped textured yarn A having torque in the S direction and a false twisted crimped textured yarn B having torque in the Z direction, wherein the false twisted crimped textured yarn A and the false twisted crimped textured yarn B contain different single fibers from each other; wherein the single fibers which are different from each other comprise a combination of a cationically dyable polyester and a cationically undyable polyester;

   wherein the crimped fiber is an interlaced yarn which has been subjected to interlacing in which the number of interlaces is 1 to 70 interlaces/m, wherein the interlacing degree is measured according to the method described in the description;
   wherein the crimped fiber has a single fiber fineness in the range of from 0.00002 to 2.0 dtex;
   wherein the crimped fiber has a total fineness in the range of from 40 to 180 dtex; and wherein a hydrophilizing agent has been applied to the cloth.

2. The cloth according to claim 1, which is a knitted fabric.

3. The cloth according to claims 1 or 2, wherein the crimped fiber has no torque.

4. The cloth according to any one of claims 1 to 3, which has a weight per unit in the range of from 50 to 200 g/m$^2$; wherein the weight per unit area is measured according to the method described in the description.

5. The cloth according to any one of claims 1 to 4, which has a stretchability of 50% or more in the cross direction, as measured in accordance with JIS L 1018-1990.

6. The cloth according to any one of claims 1 to 5, which has a stretchability recovery of 90% or more in the cross direction, as measured in accordance with JIS L 1018-1990.

7. The cloth according to any one of claims 1 to 6, which has a snagging resistance of class 3 or higher, as tested by the metal saw of JIS L 1058-1995 D3 Method for 15 hours.

8. A fiber product obtained using the cloth according to any one of claims 1 to 7, which is any one fiber product selected from the group consisting of clothing, a lining cloth, an interlining cloth, socks, a stomach band, a hat, gloves, nightclothes, a side cloth for bedclothes, a cover for bedclothes, and a car seat skin material.

**Patentansprüche**

1. Stoff, umfassend eine Kräuselfaser mit einer Drehung von maximal 30 T/m, wobei die Drehung entsprechend dem in der Beschreibung beschriebenen Verfahren gemessen wird; wobei die Kräuselfaser ein Verbundgarn ist, das ein Falschdrahtkräuseltexturgarn A mit einer Drehung in S-Richtung und ein Falschdrahtkräuseltexturgarn B mit einer Drehung in Z-Richtung enthält, wobei das Falschdrahtkräuseltexturgarn A und das Falschdrahtkräuseltexturgarn B sich voneinander unterscheidende Einzelfasern enthalten; wobei die sich voneinander unterscheidenden Einzelfasern eine Kombination aus einem kationisch färbbaren Polyester und einem kationisch nicht-färbbaren Polyester umfassen; wobei die Kräuselfaser ein verwirbeltes Garn ist, das einer Verwirbelung ausgesetzt war, bei der die Anzahl der Verwirbelungen 1 bis 70 Verwirbelungen/m beträgt, wobei der Verwirbelungsgrad entsprechend dem in der Beschreibung beschriebenen Verfahren gemessen wird; wobei die Kräuselfaser eine Einzelfaserfeinheit von 0,00002 bis 2,0 dtex aufweist;
   wobei die Kräuselfaser eine Gesamtfeinheit im Bereich von 40 bis 180 dtex aufweist und wobei ein Hydrophilierungsmittel auf den Stoff aufgetragen wurde.

2. Stoff nach Anspruch 1, der ein Gestrick ist.

3. Stoff nach Anspruch 1 oder 2, wobei die Kräuselfaser keine Drehung aufweist.

**4.** Stoff nach einem der Ansprüche 1 bis 3, der ein Gewicht pro Einheit im Bereich von 50 bis 200 g/m$^2$ aufweist; wobei das Gewicht pro Einheitsfläche entsprechend dem in der Beschreibung beschriebenen Verfahren gemessen wird.

**5.** Stoff nach einem der Ansprüche 1 bis 4, der eine Dehnbarkeit von mindestens 50 % in Querrichtung, gemessen entsprechend JIS L 1018-1990, aufweist.

**6.** Stoff nach einem der Ansprüche 1 bis 5, der eine Elastizität von mindestens 90 % in Querrichtung, gemessen entsprechend JIS L 1018-1990, aufweist.

**7.** Stoff nach einem der Ansprüche 1 bis 6, der einen Zieherwiderstand der Klasse 3 oder höher, getestet über 15 Stunden mit dem Metallsägeverfahren nach JIS L 1058-1995 D3, aufweist.

**8.** Faserprodukt, das durch die Verwendung des Stoffs nach einem der Ansprüche 1 bis 7 erhalten wird, das ein beliebiges Faserprodukt ist, das aus der Gruppe bestehend aus Kleidung, einem Futterstoff, einem Einlagestoff, Socken, einem Bund, einem Hut, Handschuhen, Schlafbekleidung, Bettware, Bettwäsche und einem Autositzbezugmaterial ausgewählt ist.

## Revendications

**1.** Étoffe comprenant une fibre frisée présentant un couple de torsion inférieur ou égal à 30 T/m, le couple de torsion étant mesuré selon le procédé décrit dans la description ; la fibre frisée étant un fil composite contenant un fil frisé texturé fausse torsion A présentant un couple de torsion dans la direction S et un fil frisé texturé fausse torsion B présentant un couple de torsion dans la direction Z, le fil frisé texturé fausse torsion A et le fil frisé texturé fausse torsion B contenant des fibres individuelles différentes les unes des autres ; les fibres individuelles qui sont différentes les unes des autres comprenant une combinaison d'un polyester apte à la teinture par colorants cationiques et d'un polyester inapte à la teinture par colorants cationiques ;

la fibre frisée étant un fil à entrecroisement qui a été soumis à un entrecroisement dans lequel le nombre d'entrecroisements est de 1 à 70 entrecroisements/m, le degré d'entrecroisement étant mesuré selon le procédé décrit dans la description ;
la fibre frisée présentant une finesse de fibre individuelle comprise entre 0,00002 et 2,0 dtex ;
la fibre frisée présentant une finesse totale comprise entre 40 et 180 dtex ; et un agent hydrophylisant ayant été appliqué à l'étoffe.

**2.** Étoffe selon la revendication 1, qui est un produit textile tricoté.

**3.** Étoffe selon la revendication 1 ou 2, la fibre frisée présentant un couple de torsion nul.

**4.** Étoffe selon l'une quelconque des revendications 1 à 3, qui présente un grammage compris entre 50 et 200 g/m$^2$ ; le grammage étant mesuré selon le procédé décrit dans la description.

**5.** Étoffe selon l'une quelconque des revendications 1 à 4, qui présente une extensibilité supérieure ou égale à 50 % dans le sens travers, mesurée selon JIS L 1018-1990.

**6.** Étoffe selon l'une quelconque des revendications 1 à 5, qui présente une récupération élastique supérieure ou égale à 90 % dans le sens travers, mesurée selon JIS L 1018-1990.

**7.** Étoffe selon l'une quelconque des revendications 1 à 6, qui présente une résistance aux accrocs de classe 3 ou supérieure, testée à l'aide de la scie à métaux du procédé JIS L 1058-1995 D3 pendant 15 heures.

**8.** Produit fibreux obtenu au moyen de l'étoffe selon l'une quelconque des revendications 1 à 7, qui est un produit fibreux quelconque choisi dans le groupe constitué de vêtements, d'une doublure, d'une entredoublure, de chaussettes, d'une ceinture abdominale, d'un bonnet, de gants, de vêtements de nuit, d'une toile latérale pour literie, d'une pièce de recouvrement pour literie, et d'un matériau de revêtement de siège de voiture.

[FIG. 1]

| X | X | YARN TYPE 1 |
|---|---|---|
| X | X | YARN TYPE 1 |

[FIG. 2]

| X | X | YARN TYPE 1 |
|---|---|---|
| X |   | YARN TYPE 1 |
|   | X | YARN TYPE 1 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008001920 A
- JP 2009138287 A
- EP 2037026 A1
- WO 2017038239 A1
- JP 2004270097 A
- JP 2004211268 A
- JP 62011744 A